# EUROPEAN PATENT SPECIFICATION

(11) **EP 4 581 441 B1**
(45) Date of publication and mention of the grant of the patent: **04.11.2026**
(21) Application number: 23848327.5
(22) Date of filing: 21.12.2023
(51) Int. Cl.: G05B 23/02, F02C 9/00

(54) **METHODS AND SYSTEM FOR CONTROLLING A TURBINE ENGINE**
VERFAHREN UND SYSTEM ZUR STEUERUNG EINES TURBINENMOTORS
PROCÉDÉS ET SYSTÈME DE COMMANDE D'UN MOTEUR À TURBINE

(30) Priority: 15.02.2023 GB 202302157
(43) Date of publication of application: 09.07.2025
(73) Proprietor: Siemens Energy Global GmbH & Co. KG, 81739 München (DE)
(72) Inventor: PANOV, Vili, Lincoln, LN1 3WT (GB)
(74) Representative: Isarpatent
(86) International application number: PCT/US2023/085276
(87) International publication number: WO 2024/172901

(56) References cited:
- WO-A1-2009/109446
- DE-T5- 112014 004 262
- US-A1- 2017 051 681

## Description

### BACKGROUND

Disclosed embodiments relate generally to the field of turbomachinery, such as may involve turbine engines, and, more particularly, to methods and system and for controlling a turbine engine.

Turbomachinery performance can generally degrade over time. Control systems provide functionality that allows control and analysis of a turbine engine. For example, the control system may include sensors, controllers, computer devices, etc., that in combination acquire, process and store data for controlling the turbine engine. The following are examples of patent literature that disclose certain known control systems in connection with turbine engines: WO2013/014202A1, "Gas Turbine Life Prediction and Optimization Device and Method"; WO2014/143187A1, "Lifing and Performance Optimization Limit Management for Turbine Engine" and US 10,452,041B2, "Gas Turbine Dispatch Optimizer Real-Time Command and Operations". US 2017/ 051681 A1 relates to a method for operating a power plant, focusing on dynamic optimization using a calibrated model. WO 2009/109446 A1 relates to a method for regulating a gas turbine in a power plant to optimize performance, emissions, efficiency, and lifespan. DE 112014004262 T5 relates to a system and method for controlling a gas turbine unit by monitoring real-time hardware wear.

### BRIEF SUMMARY

In one aspect, a computer-implemented method for controlling operation of a turbine engine according to claim 1 is provided.

In another aspect, a system according to claim 5, a program according to claim 9 and a storage medium according to claim 10 are provided.

Also, before undertaking the Detailed Description below, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

FIG. 1 is a schematic of one example of turbomachinery, such as a turbine engine, that can benefit from disclosed embodiments of methods and system for controlling the turbine engine.
FIG. 2 is a flow chart showing example steps in connection with one example embodiment of a disclosed method.
FIG. 3 is a block diagram illustrating control concepts that may be featured in disclosed embodiments.
FIG. 4 is a block diagram fragmentary representation of example structural and/or operational relationships that may be involved in disclosed embodiments.
FIG. 5 are example plots of life optimization and engine power level over a range ΔT of turbine temperature limits.
FIG. 6 are the example plots of life optimization and engine power level shown in FIG. 5, and further showing an optimization space as a function of ambient atmospheric conditions, such as ambient temperature, etc.
FIG. 7 shows relative turbine engine power as a function of ambient temperature for various example cases of respective percentages of load ratings.

### DETAILED DESCRIPTION

Turbine engine components can deteriorate over their operational lives as a function of many factors. The present inventor has recognized that nowadays turbine engines are commonly required to operate at widely varying load conditions and therefore conventional methods (e.g., utilizing pre-defined mission cycle profiles) for performing lifing analysis of the engine components become less and less representative.

Health models, such as may be indicative of damage accumulation, and lifing models, have been used to predict cumulative damage and the operational service lives of such components. Conventionally, the outputs of health models have been used post-hoc (after an event has occurred) to attempt to characterize cumulative damage in connection with components of the turbine engines, such that maintenance, repair, and/or overhauls can be appropriately scheduled. That is, conventionally, real time outputs of such health or lifing models have not been utilized to control in real time the turbine engines. The present inventor has recognized that utilization of virtual data generated in real time is conducive to control in real time of the turbine engines, so that, for example, component usage life can be appropriately maximized, and in turn component damage can be appropriately minimized notwithstanding that the turbine engine may be subject to broadly varying load conditions.

At least in view of the foregoing considerations, the present inventor discloses embodiments of system and method for controlling the turbine engine that, for example, consider actual ambient and actual operating conditions (which can vary significantly from application to application, and from customer to customer even for the same application, e.g., power generation, mechanical drive, etc.). Consequently, disclosed embodiments can more accurately and consistently estimate consumed life of, for example, turbine engine components exposed to thermo-mechanical loading. Moreover, disclosed embodiments can carry out life estimation and subsequent prognostics of remaining useful life of turbine engine components in real-time, and this in turn is conducive to the implementation of real-time optimization methods that can offer to users more confident decision making with respect to utilization of their turbomachinery assets.

Before disclosed embodiments are explained in detail, it is to be understood that disclosed embodiments are not limited in their application to the details of construction and the arrangement of components set forth in this description or illustrated in the following drawings. Disclosed embodiments are capable of being practiced or of being carried out in various ways. Also, it is to be understood that the phraseology and terminology used herein is for the purpose of description and should not be regarded as limiting.

Various technologies that pertain to disclosed embodiments will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

It is noted that while the instant disclosure includes a description in the context of a fully functional system and/or a series of acts, those skilled in the art will appreciate that at least portions of the mechanism of the present disclosure and/or described acts may be capable of being distributed in the form of computer/processor executable instructions (e.g., software/firmware applications) contained within a storage device that corresponds to a non-transitory machine-usable, computer-usable, or computer-readable medium in any of a variety of forms (e.g., flash memory, SSD, hard drive). The computer/processor executable instructions may include a routine, a sub-routine, programs, applications, modules, libraries, and/or the like. Further, it should be appreciated that computer/processor executable instructions may correspond to and/or may be generated from source code, byte code, runtime code, machine code, assembly, Java, JavaScript, Python, Rust, Swift, Go, C, C#, C++ or any other form of code that can be programmed/configured to cause at least one processor to carry out the acts and features described herein. Still further, results of the described/claimed processes or functions may be stored in a computer-readable medium, displayed on a display device, and/or the like.

It should be appreciated that acts associated with the above-described methodologies, features, and functions (other than any described manual acts) may be carried out by one or more data processing systems via operation of one or more of the processors. Thus, it is to be understood that when referring to a data processing system or control system such a system may be implemented across several data processing systems organized in a distributed system in communication with each other directly or via a network.

As used herein a processor or processor module corresponds to any electronic device that is configured via hardware circuits, software, and/or firmware to process data. For example, processors described herein may correspond to one or more (or a combination) of a microprocessor, CPU, or any other integrated circuit (IC) or other type of circuit that is capable of processing data in a data processing system. As discuss previously, the processor that is described or claimed as being configured to carry out a particular described/claimed process or function may correspond to a CPU that executes computer/processor executable instructions stored in a memory in the form of software to carry out such a described/claimed process or function. However, it should also be appreciated that such a processor may correspond to an IC that is hardwired with processing circuitry (e.g., an FPGA or ASIC IC) to carry out such a described/claimed process or function. Also, it should be understood, that reference to a processor may include multiple physical processors or cores that are configured to carry out the functions described herein. In addition, it should be appreciated that a data processing system and/or a processor may correspond to a controller that is operably configured to control at least one operation including a programable logic controller (PLC).

In addition, it should also be understood that a processor or processor module that is described or claimed as being configured to carry out a particular described/claimed process or function may correspond to the combination of the processor with the executable instructions (e.g., software/firmware applications) loaded/installed into the described memory (volatile and/or non-volatile), which are currently being executed and/or are available to be executed by the processor to cause the processor to carry out the described/claimed process or function. Thus, a processor that is powered off or is executing other software, but has the described software loaded/stored in a storage device in operative connection therewith (such as in a flash memory, SSD, or hard drive) in a manner that is available to be executed by the processor (when started by a user, hardware and/or other software), may also correspond to the described/claimed processor that is operably configured to carry out the particular processes and functions described/claimed herein.

Those of ordinary skill in the art will appreciate that hardware and software depicted in connection with disclosed embodiments may vary for particular implementations. The depicted examples are provided for the purpose of explanation only and are not meant to imply architectural limitations with respect to the present disclosure. Also, those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of the data processing system may conform to any of the various current implementations and practices known in the art.

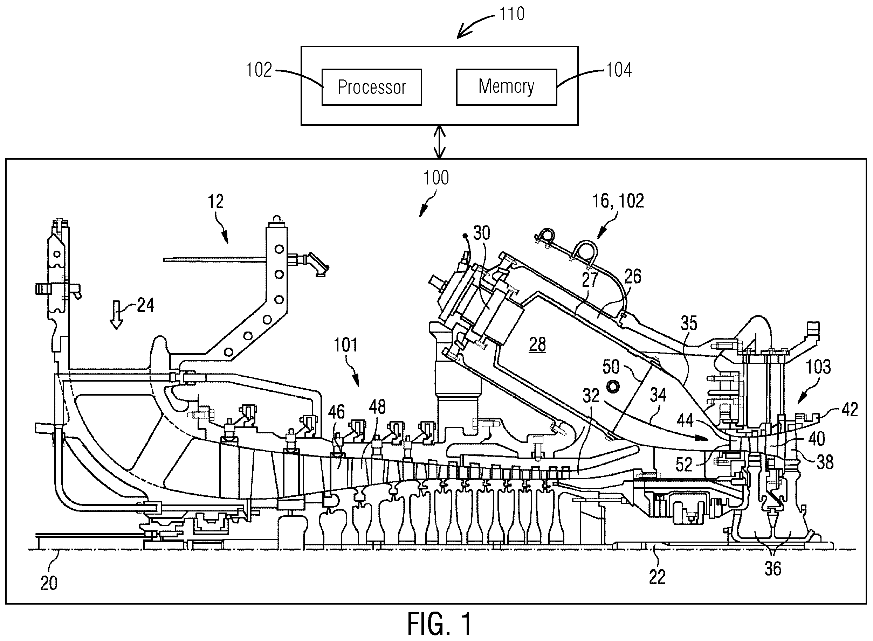

FIG. 1 shows one non-limiting example of turbomachinery, such as a turbine engine 100, that can benefit from disclosed embodiments for controlling the turbine engine. It will be appreciated that disclosed embodiments are not limited to any specific type of turbomachinery. Turbine engine 100 comprises, in flow series, an inlet 12, a compressor 101, a combustor 102 and a turbine 103 which are generally arranged in flow series and generally in the direction of a longitudinal or rotational axis 20. The turbine engine 100 further comprises a shaft 22 which is rotatable about the rotational axis 20 and which extends longitudinally through the turbine engine 100. The shaft 22 drivingly connects the turbine 103 to the compressor 101.

The terms upstream and downstream refer to the flow direction of the airflow and/or working gas flow through the engine unless otherwise stated. The terms forward and rearward refer to the general flow of gas through the engine. The terms axial, radial and circumferential are made with reference to a rotational axis 20 of the engine.

In operation of turbine engine 100, a flow of air 24, which is taken in through the air inlet 12 is compressed by the compressor 101 and delivered to the combustor 102 comprising a burner section 16. The burner section 16 comprises a burner plenum 26, one or more combustion chambers 28 that may be defined by a double wall can 27 and at least one burner 30 fixed to each combustion chamber 28. The combustion chambers 28 and the burners 30 are located inside the burner plenum 26. The compressed air passing through the compressor 12 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled via a transition duct 35 to the turbine 103.

The turbine 103 comprises a number of blade-carrying discs 36 attached to the shaft 22. In the present example, two discs 36 each carry an annular array of turbine blades 38. However, the number of blade-carrying discs could be different, e.g., just one disc or more than two discs. In addition, guiding vanes 40, which are fixed to a stator 42 of the turbine engine 100, are disposed between the turbine blades 38. Between the exit of the combustion chamber 28 and the leading turbine blades 38 inlet guiding vanes 44 are provided.

The combustion gas from the combustion chamber 28 enters the turbine 103 and drives the turbine blades 38 which in turn rotates the shaft 22. The guiding vanes 40, 44 serve to optimise the angle of the combustion or working gas on to the turbine blades 38. Compressor 101 comprises an axial series of guide vane stages 46 and rotor blade stages 48.

The non-limiting example of the turbomachinery shown in FIG. 1 further includes a controller or control system 110 operatively coupled to turbine engine 100. Control system 110 comprise one or more processors or processing units 102, memory 104, and computer-readable media, such as non-transitory machine-usable media. Control system 110 constitutes a computing system that executes programs and operations to control operation of turbine engine 100 using sensor inputs, scheduling algorithms, control models and/or commands from human operators. The programs and functions executed by the control system 110 may include, among others, sensing and/or modeling operating parameters, operational boundaries, applying operational boundary models, applying scheduling algorithms and applying boundary control logic.

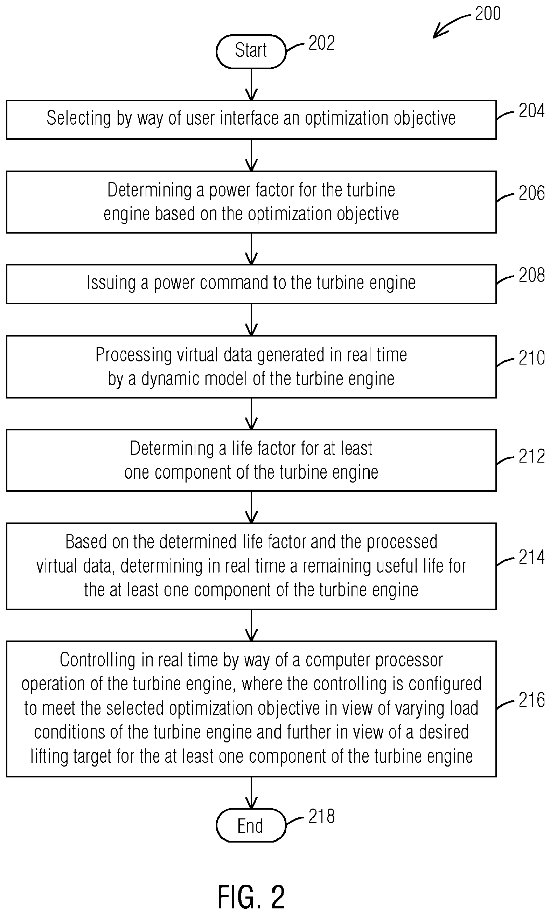

FIG. 2 is a flow chart 200 depicting example steps (e.g., involving structural and/or operational relationships) in connection with one example embodiment of a disclosed computer-implemented method for controlling operation of a turbine engine. Subsequent to start step 202, step 204 allows selecting, e.g., by way of a user interface, an optimization objective from a menu of predefined optimization objectives for the turbine engine. Step 206 allows determining a power factor for the turbine engine based on the optimization objective selected for the turbine engine. Step 208 allows issuing a power command to the turbine engine, where the power command sets a power level for operating the turbine engine, and where the power level is based on the determined power factor. Step 210 allows processing virtual data generated in real time by a dynamic model of the turbine engine. The virtual data being indicative of a response of the turbine engine subject to the power level setting for the turbine engine. The response may include a transient response of the turbine engine. Step 212 allows determining a life factor for at least one component of the turbine engine subject to the power level setting for the turbine engine. Based on the determined life factor and the processed virtual data, step 214 allows determining in real time a remaining useful life for the at least one component of the turbine engine subject to the power level setting for the turbine engine. Prior to return step 218, step 216 allows controlling in real time, e.g., by way of a computer processor, operation of the turbine engine. The controlling being configured to meet the selected optimization objective in view of varying load conditions of the turbine engine and further in view of a desired lifing target for the at least one component of the turbine engine.

According to the invention, the predefined optimization objectives include maximization of power generated by the turbine engine, maximization of the remaining useful life for the at least one component of the turbine engine, and a blended optimization of the power generated by the turbine engine and the remaining useful life for the at least one component of the turbine engine.

According to the invetion, the method includes processing data indicative of ambient atmospheric conditions, such as ambient temperature, altitude and relative humidity, and where the determining of the power factor for the turbine engine is further based on the data indicative of the ambient atmospheric conditions.

In one non-limiting embodiment, the controlling in real time of the operation of the turbine engine by the computer processor comprises determining a temperature limit offset relative to a temperature limit set point, the temperature limit offset based on the ambient atmospheric conditions and the selected optimization objective.

According to the invention, the controlling in real time of the operation of the turbine engine by the computer processor comprises iteratively issuing a series of power commands to the turbine engine. The series of power commands may be configured to set respective power levels adjusted to meet the selected optimization objective in view of the varying load conditions of the turbine engine and further in view of the desired lifing target for the at least one component of the turbine engine.

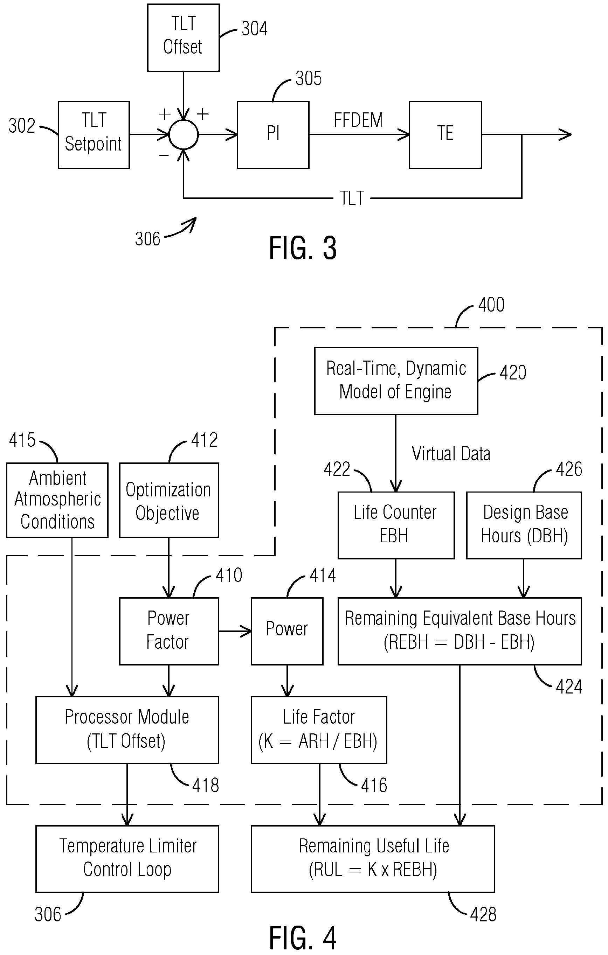

FIG. 3 is a block diagram illustrating example control concepts featured in disclosed embodiments. As noted above, disclosed embodiments are effective to optimize component life versus turbine engine power, such as when the turbine engine operation may be limited by operating temperature, for example, due to high ambient temperature, etc. For example, when the turbine engine operates at high ambient temperature, turbine engine power may be limited by a Turbine Limiting Temperature (TLT) setpoint (block 302). In order to, for example, generate power in excess of the prescribed control limit, the turbine engine may be overfired by certain amount (ΔTLT) relative to the TLT setpoint. That is, in general ΔTLT represents a difference relative to the TLT setpoint.

In disclosed embodiments, as noted above, the operator of a given turbine engine can selectively operate the turbine engine choosing a respective one of the predefined optimization objectives, such as any of the following objectives: maximization of power generated by the turbine engine, maximization of the remaining useful life for the at least one component of the turbine engine, and a blended optimization of the power generated by the turbine engine and the remaining useful life for the at least one component of the turbine engine.

For each optimization objective, there is a unique functional relationship to ΔTLT. Because a typical engine rating curve (power characteristics) for the turbine engine, is typically inversely proportional to ambient temperature (e.g., power reduction with increased ambient temperature), the optimization space besides defining an appropriate ΔTLT functional relationship for each optimization objective can also consider ambient atmospheric conditions, e.g., ambient temperature, etc. By way of example, the optimization space could be represented with a 2D matrix form. In the block diagram shown in FIG. 3, TLT Offset (block 304) represents an adjustment with respect to the TLT setpoint, characterized as a function of ambient atmospheric conditions and the respective optimization objective selected by the operator. To implement the optimization process, an estimated TLT Offset is introduced into the temperature limiter control loop 306 to, for example, generate (e.g., by way of a proportional-integral (PI) control module 305) an appropriate fuel flow demand (FFDEM) for the turbine engine (TE). That is, the optimization process can be configured to determine an appropriate TLT Offset based on ambient atmospheric conditions, in addition to the selected optimization objective (e.g., power boost vs life extension).

FIG. 4 is a block diagram representation of example structural and/or operational relationships involved in disclosed embodiments. Block 400 in FIG. 4 represents a control system sub-component configured to implement the method described above in the context of FIG. 2. That is, block 400 represents a component that is part of a larger component of the control system of the turbine engine. Hereinafter this block is simply referred to as control system 400 with the understanding that this block represents just a fragment of the control system of the turbine engine. In one example embodiment, control system 400 includes a power factor processor module 410 configured to determine a power factor for the turbine engine based on the optimization objective, as may be selected by the operator of the turbine engine, via a user interface 412. The determined power factor is supplied to a power command processor module 414 configured to issue a power command to set a power level for operating the turbine engine, where the power level is based on the power factor determined by power factor processor module 410. A life factor processor module 416 is configured to determine a life factor (K) for at least one component of the turbine engine subject to the power level setting for the turbine engine.

The determined power factor together with data indicative of ambient atmospheric conditions (block 415) is further supplied to an optimizer processor module 418, such as configured to estimate the TLT Offset discussed above in the context of FIG. 3. That is, in the context of the temperature limiter control loop 306.

Continuing with the discussion of control system 400, according to the invention, control system 400 includes a real-time dynamic model 420 of the turbine engine. As would be appreciated by one skilled in the art, a dynamic model can provide a simplified representation of a real-world entity (for example, the turbine engine) by way of functional relationships utilizing, for example, computer code and can serve to assess the time-varying behavior of the turbine engine. As would be further appreciated by one skilled in the art, real-time or real time describes various operations in computing or other processes that ensure a response within a certain specified time, such as in a time scale in the order of milliseconds, to, for example, appropriately analyze and react to the time-varying behavior of the turbine engine.

According to the invention, real-time dynamic model 420 is configured to generate virtual data indicative of a response of the turbine engine subject to the power level setting. The virtual data generated by real-time dynamic model 420 is processed in a life counter, such as may be configured in a processor module 422, to determine an effective base hours (EBH) count for the at least one component of the turbine engine. The EBH count calculated by life counter 422 is in turn processed by a Remaining Equivalent Base Hours (REBH) counter, as configured in processor module 424. The REBH count represents the difference between a Design Base Hours (DBH) count obtained from a storage module 426 and the EBH count. A processor module 428 calculates a Remaining Useful Life (RUL) for the at least one component of the turbine engine by calculating the product of life factor (K) and REBH count.

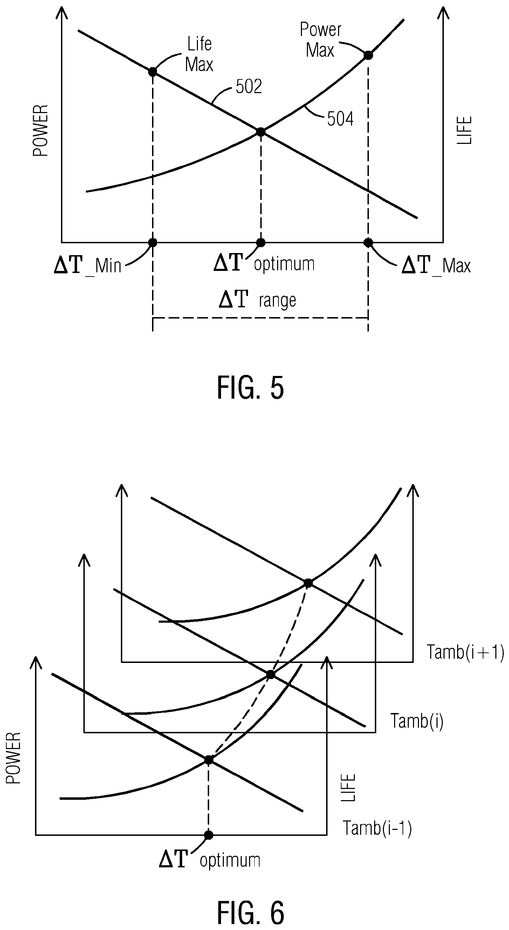

FIG. 5 shows respective example plots of life optimization 502 over a range ΔT of turbine temperature limits and power level optimization 504 over the range ΔT of turbine temperature limits. The plots allow visualizing example interactions of life optimization and power level optimization over the range ΔT of turbine temperature limits. For example, over the range ΔT there is a value ΔT_Min where the operational life of a given component can be maximized, as indicated by the point labeled Life Max. Conversely, over the range ΔT there is a value ΔT_Max where the power level generated by the turbine engine is maximized as indicated by the point labeled Power_Max. In this example, the intersection of the two plots 502 and 504 at ΔT_Optimum represents a point that indicates blended optimization of both the life of component and the power level generated by the turbine engine. That is, a singular point where both the life of the component and the power level are each respectively mutually optimized.

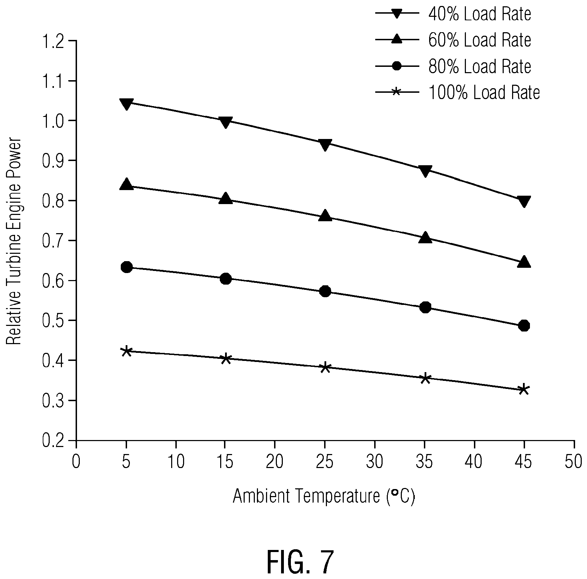

FIG. 6 builds on the concepts illustrated in FIG. 5 and brings into the optimization space the influence of ambient atmospheric conditions (e.g., ambient temperature) regarding the interactions of life optimization and power level optimization over the range ΔT of turbine temperature limits. It can be appreciated in FIG. 6 that the optimization space can be represented by a 2D matrix to account for ambient atmospheric conditions, e.g., ambient temperature. This allows accounting for the fact that the turbine engine will typically experience power reduction with increased ambient temperature, or conversely, will typically experience power increase with reduced ambient temperature, as shown in FIG. 7, which shows relative turbine engine power as a function of ambient temperature for various example cases of respective percentages of load ratings.

In operation, disclosed embodiments are effective for implementing real-time gas turbine optimization, which offers users a more confident decision making with respect to appropriate utilization of their engine considering conflicting objectives, such as engine power versus component life.

In operation, disclosed embodiments are effective for implementing life count calculations that may readily applied to a broad range of thermo-mechanical damage modes, and to various hot gas path components.

In operation, disclosed embodiments are effective for real-time execution in a system to account not just for off-base load conditions (e.g., part load under steady-state conditions), but also for transient conditions. In this way, disclosed embodiments can offer more accurate life consumption calculations than was possible in certain known implementations.

In operation, disclosed embodiments offer by way of example: superior prognostics capability based on degradation modelling (for example, a linear model could be enhanced with non-linear regression modelling approach for various degradation modes); permits users to configure and run their engines in a more optimal manner avoiding unduly conservative (and costlier) operation /maintenance techniques.

In operation, disclosed embodiments permit real-time individualized optimization of a fleet of asset by integration of our optimization logic in an existing control loop.

In operation, disclosed embodiments permit estimation of life consumption during transient operation (such as ranging from slow to rapid transients), make clever utilization of virtual data, as may be generated by a real-time engine model or digital twin of the engine.

## Claims

1. A computer-implemented method (200) for controlling operation of a turbine engine (100), the method comprising:
selecting (S204) by way of a user interface (412) an optimization objective from a menu of predefined optimization objectives for the turbine engine (100), wherein the predefined optimization objectives are selected from the group consisting of maximization of power generated by the turbine engine, maximization of the remaining useful life for the at least one component of the turbine engine, and a blended optimization of the power generated by the turbine engine and the remaining useful life for the at least one component of the turbine engine;
processing data indicative of ambient atmospheric conditions;
determining (S206) a power factor for the turbine engine (100) based on the optimization objective selected for the turbine engine (100) and based on the data indicative of the ambient atmospheric conditions;
issuing (S208) a power command to the turbine engine, the power command setting a power level for operating the turbine engine, wherein the power level is based on the determined power factor;
generating, by a real-time dynamic model (420), virtual data indicative of a response of the turbine engine subject to the power level setting, wherein the real-time dynamic model (420) provides a simplified representation of the turbine engine (100);
processing (S210), in a life counter (422), the virtual data generated in real time by the dynamic model (420) of the turbine engine (100) to determine an effective base hours, EBH, count for at least one component of the turbine engine (100);
processing, by a remaining equivalent base hours, REBH, count (424), the EBH count to obtain a REBH count representing the difference between a design base hours, DBH, count obtained from a storage module (426) and the EBH count;
determining (S212) a life factor (K) for the at least one component of the turbine engine (100) subject to the power level setting for the turbine engine (100);
based on the determined life factor and the processed virtual data, determining (S214) in real time a remaining useful life for the at least one component of the turbine engine subject to the power level setting for the turbine engine, by calculating, by a processor (428), the remaining useful life, RUL, for the at least one component of the turbine engine by calculating a product of the life factor (K) and the REBH count; and
controlling (S216) in real time by way of a computer processor operation of the turbine engine, the controlling configured to meet the selected optimization objective in view of varying load conditions of the turbine engine and further in view of a desired lifing target for the at least one component of the turbine engine, comprising iteratively issuing a series of power commands to the turbine engine, the series of power commands setting respective power levels adjusted to meet the selected optimization objective in view of the varying load conditions of the turbine engine and further in view of the desired lifing target for the at least one component of the turbine engine.

2. The method according to claim 1, wherein the data indicative of the ambient atmospheric conditions are selected from the group consisting of ambient temperature, altitude and relative humidity.

3. The method according to claim 1, wherein the controlling in real time of the operation of the turbine engine by the computer processor comprises determining a temperature limit offset relative to a temperature limit set point, the temperature limit offset based on the ambient atmospheric conditions and the selected optimization objective.

4. The method according to claim 1, wherein the virtual data indicative of the response of the turbine engine includes a transient response of the turbine engine.

5. A system (400) comprising:
a turbine engine (100);
a user interface (412) configured to select an optimization objective from a menu of predefined optimization objectives for the turbine engine (100), wherein the optimization objectives are selected from the group consisting of maximization of power generated by the turbine engine, maximization of the remaining useful life for the at least one component of the turbine engine, and a blended optimization of the power generated by the turbine engine and the remaining useful life for the at least one component of the turbine engine;
a dynamic model of the turbine engine, wherein the dynamic model (420) provides a simplified representation of the turbine engine (100);
a control system including a computer processor, the control system operatively coupled to the user interface and to the dynamic model of the turbine engine, the computer processor configured to:
processing data indicative of ambient atmospheric conditions;
determine a power factor for the turbine engine based on an optimization objective selected for the turbine engine and based on the data indicative of the ambient atmospheric conditions;
issue a power command to the turbine engine, wherein the power command setting is a power level for operating the turbine engine based on the determined power factor;
generating, by the dynamic model (420), virtual data indicative of a response of the turbine engine subject to the power level setting;
process, in a life counter (422), the virtual data generated by the dynamic model of the turbine engine to determine an effective base hours, EBH, count for at least one component of the turbine engine (100);
process, by a remaining equivalent base hours, REBH, count (424), the EBH count to obtain a REBH count representing the difference between a design base hours, DBH, count obtained from a storage module (426) and the EBH count;
determine a life factor (K) for at the least one component of the turbine engine (100) subject to the power level setting for the turbine engine;
based on the determined life factor and the processed virtual data, determine in real time a remaining useful life for the at least one component of the turbine engine subject to the power level setting for the turbine engine, by calculating, by a processor (428), the remaining useful life, RUL, for the at least one component of the turbine engine by calculating a product of the life factor (K) and the REBH count; and
control in real time operation of the turbine engine, the control configured to meet the selected optimization objective in view of varying load conditions of the turbine engine and further in view of a desired lifing target for the at least one component of the turbine engine, wherein the control in real time of the operation of the turbine engine comprises iterative issuance of a series of power commands to the turbine engine, the series of power commands setting respective power levels adjusted to meet the selected optimization objective in view of the varying load conditions of the turbine engine and further in view of the desired lifing target for the at least one component of the turbine engine.

6. The system according to claim 5, wherein the data indicative of the ambient atmospheric conditions are selected from the group consisting of ambient temperature, altitude and relative humidity.

7. The system according to claim 5, wherein the control in real time of the operation of the turbine engine comprises a determination of a temperature limit offset relative to a temperature limit set point based on the ambient atmospheric conditions and the selected optimization objective.

8. The system according to claim 5, wherein the virtual data indicative of the response of the turbine engine includes a transient response of the turbine engine.

9. A computer program product comprising instructions which, when the program is executed by a computer, cause the computer to carry out the steps of the method of claim 1 to 4.

10. A computer-readable storage medium comprising instructions which, when executed by a computer, cause the computer to carry out the steps of the method of claim 1 to 4.

## Patentansprüche

1. Computerimplementiertes Verfahren (200) zum Steuern des Betriebs eines Turbinenmotors (100), wobei das Verfahren Folgendes umfasst:
Auswählen (S204) eines Optimierungsziels aus einem Menü vordefinierter Optimierungsziele für den Turbinenmotor (100) über eine Benutzerschnittstelle (412), wobei die vordefinierten Optimierungsziele aus der Gruppe ausgewählt werden, die aus Maximierung der durch den Turbinenmotor erzeugten Leistung, Maximierung der verbleibenden Lebensdauer für die mindestens eine Komponente des Turbinenmotors und einer gemischten Optimierung der Leistung, die durch den Turbinenmotor erzeugt wird, und der verbleibenden Lebensdauer für die mindestens eine Komponente des Turbinenmotors, besteht;
Verarbeiten von Daten, die Umgebungsatmosphärenbedingungen angeben;
Bestimmen (S206) eines Leistungsfaktors für den Turbinenmotor (100) basierend auf dem Optimierungsziel, das für den Turbinenmotor (100) ausgewählt wurde, und basierend auf den Daten, die die Umgebungsatmosphärenbedingungen angeben;
Ausgeben (S208) eines Leistungsbefehls an den Turbinenmotor, wobei der Leistungsbefehl einen Leistungspegel zum Betreiben des Turbinenmotors einstellt, wobei der Leistungspegel auf dem bestimmten Leistungsfaktor basiert;
Erzeugen virtueller Datendurch ein dynamisches Echtzeitmodell (420), die eine Reaktion des Turbinenmotors angeben, die der Leistungspegeleinstellung unterliegt, wobei das dynamische Echtzeitmodell (420) eine vereinfachte Darstellung des Turbinenmotors (100) vorsieht;
Verarbeiten (S210) der virtuellen Daten in einem Lebensdauerzähler (422), die in Echtzeit durch das dynamische Modell (420) des Turbinenmotors (100) erzeugt werden, um eine effektive Basisstundenzahl, EBH, für mindestens eine Komponente des Turbinenmotors (100) zu bestimmen;
Verarbeiten der EBH-Zahl durch eine restliche äquivalente Basisstundenzahl, REBH, (424), um eine REBH-Zahl zu erhalten, die die Differenz zwischen einer Design-Basisstundenzahl, DBH, die von einem Speichermodul (426) erhalten wird, und der EBH-Zahl darstellt;
Bestimmen (S212) eines Lebensfaktors (K) für die mindestens eine Komponente des Turbinenmotors (100), der der Leistungspegeleinstellung für den Turbinenmotor (100) unterliegt;
basierend auf dem bestimmten Lebensdauerfaktor und den verarbeiteten virtuellen Daten, Bestimmen (S214) einer verbleibenden Lebensdauer für die mindestens eine Komponente des Turbinenmotors, die der Leistungspegeleinstellung für den Turbinenmotor unterliegt, in Echtzeit durch Berechnen der verbleibenden Lebensdauer, RUL, für die mindestens eine Komponente des Turbinenmotors durch Berechnen eines Produkts aus dem Lebensdauerfaktor (K) und der REBH-Zahl durch einen Prozessor (428); und
Steuern (S216) des Betriebs des Turbinenmotors in Echtzeit mittels eines Computerprozessors, wobei das Steuern dazu ausgelegt ist, das ausgewählte Optimierungsziel in Anbetracht variierender Lastbedingungen des Turbinenmotors und ferner in Anbetracht eines gewünschten Hubziels für die mindestens eine Komponente des Turbinenmotors zu erfüllen, umfassend iteratives Ausgeben einer Reihe von Leistungsbefehlen an den Turbinenmotor, wobei die Reihe von Leistungsbefehlen jeweilige Leistungspegel einstellen, die angepasst sind, um das ausgewählte Optimierungsziel in Anbetracht der variierenden Lastbedingungen des Turbinenmotors und ferner in Anbetracht des gewünschten Hubziels für die mindestens eine Komponente des Turbinenmotors zu erfüllen.

2. Verfahren nach Anspruch 1, wobei die Daten, die die Umgebungsatmosphärenbedingungen angeben, aus der Gruppe ausgewählt sind, die aus Umgebungstemperatur, Höhe und relativer Feuchtigkeit besteht.

3. Verfahren nach Anspruch 1, wobei das Steuern des Betriebs des Turbinenmotors in Echtzeit mittels des Computerprozessors das Bestimmen eines Temperaturgrenzwertversatzes relativ zu einem Temperaturgrenzsollwert umfasst, wobei der Temperaturgrenzwertversatz auf den Umgebungsatmosphärenbedingungen und dem ausgewählten Optimierungsziel basiert.

4. Verfahren nach Anspruch 1, wobei die virtuellen Daten, die die Reaktion des Turbinentriebwerks angeben, eine transiente Reaktion des Turbinentriebwerks enthalten.

5. System (400), umfassend:
einen Turbinenmotor (100);
eine Benutzerschnittstelle (412), die dazu ausgelegt ist, ein Optimierungsziel aus einem Menü vordefinierter Optimierungsziele für den Turbinenmotor (100) auszuwählen, wobei die Optimierungsziele aus der Gruppe ausgewählt werden, die aus Maximierung der durch den Turbinenmotor erzeugten Leistung, Maximierung der verbleibenden Lebensdauer für die mindestens eine Komponente des Turbinenmotors und einer gemischten Optimierung der Leistung, die durch den Turbinenmotor erzeugt wird, und der verbleibenden Lebensdauer für die mindestens eine Komponente des Turbinenmotors, besteht;
ein dynamisches Modell des Turbinenmotors, wobei das dynamische Modell (420) eine vereinfachte Darstellung des Turbinenmotors (100) vorsieht;
ein Steuersystem, das einen Computerprozessor enthält, wobei das Steuersystem mit der Benutzerschnittstelle und mit dem dynamischen Modell des Turbinenmotors wirkgekoppelt ist, wobei der Computerprozessor zu Folgendem ausgelegt ist:
Verarbeiten von Daten, die Umgebungsatmosphärenbedingungen angeben;
Bestimmen eines Leistungsfaktors für den Turbinenmotor basierend auf dem Optimierungsziel, das für den Turbinenmotor ausgewählt wurde, und basierend auf den Daten, die die Umgebungsatmosphärenbedingungen angeben;
Ausgeben eines Leistungsbefehls an den Turbinenmotor, wobei der Leistungsbefehl einen Leistungspegel zum Betreiben des Turbinenmotors basierend auf dem bestimmten Leistungsfaktor einstellt;
Erzeugen virtueller Daten durch das dynamische Modell (420), die eine Reaktion des Turbinenmotors angeben, die der Leistungspegeleinstellung unterliegt;
Verarbeiten der virtuellen Daten in einem Lebensdauerzähler (422), die durch das dynamische Modell des Turbinenmotors erzeugt werden, um eine effektive Basisstundenzahl, EBH, für mindestens eine Komponente des Turbinenmotors (100) zu bestimmen;
Verarbeiten der EBH-Zahl durch eine restliche äquivalente Basisstundenzahl, REBH, (424), um eine REBH-Zahl zu erhalten, die die Differenz zwischen einer Design-Basisstundenzahl, DBH, die von einem Speichermodul (426) erhalten wird, und der EBH-Zahl darstellt;
Bestimmen eines Lebensfaktors (K) für mindestens eine Komponente des Turbinenmotors (100), der der Leistungspegeleinstellung für den Turbinenmotor unterliegt;
basierend auf dem bestimmten Lebensdauerfaktor und den verarbeiteten virtuellen Daten, Bestimmen einer verbleibenden Lebensdauer für die mindestens eine Komponente des Turbinenmotors, die der Leistungspegeleinstellung für den Turbinenmotor unterliegt, in Echtzeit durch Berechnen der verbleibenden Lebensdauer, RUL, für die mindestens eine Komponente des Turbinenmotors durch Berechnen eines Produkts aus dem Lebensdauerfaktor (K) und der REBH-Zahl durch einen Prozessor (428); und
Steuern des Betriebs des Turbinenmotors in Echtzeit, wobei das Steuern dazu ausgelegt ist, das ausgewählte Optimierungsziel in Anbetracht variierender Lastbedingungen des Turbinenmotors und
ferner in Anbetracht eines gewünschten Hubziels für die mindestens eine Komponente des Turbinenmotors zu erfüllen, wobei das Steuern des Betriebs des Turbinenmotors in Echtzeit iteratives Ausgeben einer Reihe von Leistungsbefehlen an den Turbinenmotor umfasst, wobei die Reihe von Leistungsbefehlen jeweilige Leistungspegel einstellen, die angepasst sind, um das ausgewählte Optimierungsziel in Anbetracht der variierenden Lastbedingungen des Turbinenmotors und ferner in Anbetracht des gewünschten Hubziels für die mindestens eine Komponente des Turbinenmotors zu erfüllen.

6. System nach Anspruch 5, wobei die Daten, die die Umgebungsatmosphärenbedingungen angeben, aus der Gruppe ausgewählt sind, die aus Umgebungstemperatur, Höhe und relativer Feuchtigkeit besteht.

7. System nach Anspruch 5, wobei das Steuern des Betriebs des Turbinenmotors in Echtzeit eine Bestimmung eines Temperaturgrenzwertversatzes relativ zu einem Temperaturgrenzsollwert basierend auf den Umgebungsatmosphärenbedingungen und dem ausgewählten Optimierungsziel umfasst.

8. System nach Anspruch 5, wobei die virtuellen Daten, die die Reaktion des Turbinentriebwerks angeben, eine transiente Reaktion des Turbinentriebwerks enthalten.

9. Computerprogrammprodukt, das Anweisungen umfasst, die, wenn das Programm durch einen Computer ausgeführt wird, den Computer veranlassen, die Schritte des Verfahrens nach Anspruch 1 bis 4 auszuführen.

10. Computerlesbares Speichermedium, das Anweisungen umfasst, die, wenn sie durch einen Computer ausgeführt werden, den Computer veranlassen, die Schritte des Verfahrens nach Anspruch 1 bis 4 auszuführen.

## Revendications

1. Procédé (200) mis en œuvre par ordinateur de commande du fonctionnement d'un moteur à turbine (100), le procédé comprenant :
la sélection (S204) par une interface utilisateur (412) d'un objectif d'optimisation dans un menu d'objectifs d'optimisation prédéfinis du moteur à turbine (100), dans lequel les objectifs d'optimisation prédéfinis sont sélectionnés dans le groupe constitué par la maximisation de la puissance produite par le moteur à turbine, la maximisation de la durée de vie restante de l'au moins un composant du moteur à turbine, et une optimisation combinée de la puissance produite par le moteur à turbine et de la durée de vie restante pour l'au moins un composant du moteur à turbine ;
le traitement de données indicatives de conditions atmosphériques ambiantes ;
la détermination (S206) d'un facteur de puissance pour le moteur à turbine (100) sur la base de l'objectif d'optimisation sélectionné pour le moteur à turbine (100) et sur la base des données indicatives des conditions atmosphériques ambiantes ;
l'émission (S208) d'une commande de puissance à destination du moteur à turbine, la commande de puissance réglant un niveau de puissance pour faire fonctionner le moteur à turbine, le niveau de puissance étant basé sur le facteur de puissance déterminé ;
la génération, par un modèle dynamique en temps réel (420), de données virtuelles indicatives d'une réponse du moteur à turbine soumis au réglage de niveau de puissance, le modèle dynamique en temps réel (420) fournissant une représentation simplifiée du moteur à turbine (100) ;
le traitement (S210), dans un compteur de durée de vie (422), des données virtuelles générées en temps réel par le modèle dynamique (420) du moteur à turbine (100) pour déterminer un nombre des heures de base effectives, EBH, pour au moins un composant du moteur à turbine (100) ;
le traitement, par un nombre d'heures de base équivalentes restantes, REBH, (424), du nombre EBH pour obtenir un nombre REBH représentant la différence entre un nombre d'heures de base de conception, DBH, obtenu à partir d'un module de stockage (426) et le nombre EBH ;
la détermination (S212) d'un facteur de durée de vie (K) du ou des composants du moteur à turbine (100) soumis au réglage du niveau de puissance du moteur à turbine (100) ;
sur la base du facteur de durée de vie déterminé et des données virtuelles traitées, la détermination (S214) en temps réel d'une durée de vie restante pour le ou les composants du moteur à turbine soumis au réglage du niveau de puissance du moteur à turbine, en calculant, par un processeur (428), la durée de vie restante, RUL, pour le ou les composants du moteur à turbine par le calcul d'un produit du facteur de durée de vie (K) et du nombre REBH ; et
la commande (S216) en temps réel au moyen du fonctionnement d'un processeur informatique du moteur à turbine, la commande étant configurée pour remplir l'objectif d'optimisation sélectionné en fonction de variations de conditions de charge du moteur à turbine et en outre en fonction d'une cible de levage souhaitée pour le ou les composants du moteur à turbine, comprenant l'émission itérative d'une série de commandes de puissance à destination du moteur à turbine, la série de commandes de puissance réglant des niveaux de puissance respectifs ajustés pour remplir l'objectif d'optimisation sélectionné en fonction des variations de conditions de charge du moteur à turbine et en outre en fonction de la cible de levage souhaitée pour le ou les composants du moteur à turbine.

2. Procédé selon la revendication 1, dans lequel les données indicatives des conditions atmosphériques ambiantes sont sélectionnées dans le groupe constitué par la température ambiante, l'altitude et l'humidité relative.

3. Procédé selon la revendication 1, dans lequel la commande en temps réel du fonctionnement du moteur à turbine par le processeur informatique comprend la détermination d'un décalage de limite de température par rapport à un point de consigne de limite de température, le décalage de limite de température étant basé sur les conditions atmosphériques ambiantes et l'objectif d'optimisation sélectionné.

4. Procédé selon la revendication 1, dans lequel les données virtuelles indicatives de la réponse du moteur à turbine comprennent une réponse transitoire du moteur à turbine.

5. Système (400), comprenant :
un moteur à turbine (100) ;
une interface utilisateur (412) configurée pour sélectionner un objectif d'optimisation dans un menu d'objectifs d'optimisation prédéfinis du moteur à turbine(100), dans lequel les objectifs d'optimisation sont sélectionnés dans le groupe constitué par la maximisation de la puissance produite par le moteur à turbine,
la maximisation de la durée de vie restante de l'au moins un composant du moteur à turbine, et une optimisation combinée de la puissance produite par le moteur à turbine et de la durée de vie restante pour l'au moins un composant du moteur à turbine ;
un modèle dynamique du moteur à turbine, dans lequel le modèle dynamique (420) fournit une représentation simplifiée du moteur à turbine (100) ;
un système de commande comprenant un processeur informatique, le système de commande étant couplé en fonctionnement à l'interface utilisateur et au modèle dynamique du moteur à turbine, le processeur informatique étant configuré pour :
traiter des données indicatives de conditions atmosphériques ambiantes ;
déterminer un facteur de puissance pour le moteur à turbine sur la base d'un objectif d'optimisation sélectionné pour le moteur à turbine et sur la base des données indicatives des conditions atmosphériques ambiantes ;
émettre une commande de puissance à destination du moteur à turbine, dans lequel le réglage de la commande de puissance est un niveau de puissance pour faire fonctionner le moteur à turbine sur la base du facteur de puissance déterminé ;
générer par le modèle dynamique (420) des données virtuelles indicatives d'une réponse du moteur à turbine soumis au réglage de niveau de puissance ;
traiter, dans un compteur de durée de vie (422), les données virtuelles générées par le modèle dynamique du moteur à turbine pour déterminer un nombre d'heures de base effectives, EBH, pour au moins un composant du moteur à turbine (100) ;
traiter, par un nombre d'heures de base équivalentes restantes, REBH, (424), le nombre EBH pour obtenir un nombre REBH représentant la différence entre un nombre d'heures de base de conception, DBH, obtenu à partir d'un module de stockage (426) et le nombre EBH ;
déterminer un facteur de durée de vie (K) pour le ou les composants du moteur à turbine (100) soumis au réglage du niveau de puissance du moteur à turbine ;
sur la base du facteur de durée de vie déterminé et des données virtuelles traitées, déterminer en temps réel une durée de vie restante pour le ou les composants du moteur à turbine soumis au réglage du niveau de puissance du moteur à turbine, en calculant,
par un processeur (428), la durée de vie restante, RUL, pour le ou les composants du moteur à turbine par le calcul d'un produit du facteur de durée de vie (K) et du nombre REBH ; et
commander en temps réel le fonctionnement du moteur à turbine, la commande étant configurée pour remplir l'objectif d'optimisation sélectionné en fonction de variations de conditions de charge du moteur à turbine et en outre en fonction d'une cible de levage souhaitée pour le ou les composants du moteur à turbine, dans lequel la commande en temps réel du fonctionnement du moteur à turbine comprend l'émission itérative d'une série de commandes de puissance à destination du moteur à turbine, la série de commandes de puissance réglant des niveaux de puissance respectifs ajustés pour répondre à l'objectif d'optimisation sélectionné en fonction des variations de conditions de charge du moteur à turbine et en outre en fonction de la cible de levage souhaitée pour le ou les composants du moteur à turbine.

6. Système selon la revendication 5, dans lequel les données indicatives des conditions atmosphériques ambiantes sont sélectionnées dans le groupe constitué par la température ambiante, l'altitude et l'humidité relative.

7. Système selon la revendication 5, dans lequel la commande en temps réel du fonctionnement du moteur à turbine comprend une détermination d'un décalage de limite de température par rapport à un point de consigne de limite de température sur la base des conditions atmosphériques ambiantes et de l'objectif d'optimisation sélectionné.

8. Système selon la revendication 5, dans lequel les données virtuelles indicatives de la réponse du moteur à turbine comprennent une réponse transitoire du moteur à turbine.

9. Produit programme informatique comprenant des instructions qui, lorsque le programme est exécuté par un ordinateur, amènent l'ordinateur à exécuter les étapes du procédé selon les revendications 1 à 4.

10. Support de stockage lisible par ordinateur comprenant des instructions qui, lorsqu'elles sont exécutées par un ordinateur, amènent l'ordinateur à exécuter les étapes du procédé selon les revendications 1 à 4.
